# FASCICULE DE BREVET EUROPEEN

(11) **EP 2 159 763 B1**
(45) Date de publication et mention de la délivrance du brevet: **04.03.2020**
(21) Numéro de dépôt: 09169109.7
(22) Date de dépôt: 01.09.2009
(51) Int. Cl.: H04L 29/06, G06Q 20/04, G06Q 20/32, G06Q 20/34, G06Q 20/36, H04L 29/08

(54) **Système et procédé pour délivrer un bien ou un service à un utilisateur**
System und Verfahren zur Übermittlung einer Ware oder Dienstleitung an einen Benutzer
System and method for delivering a good or a service to a user

(30) Priorité: 01.09.2008 FR 0855851
(43) Date de publication de la demande: 03.03.2010
(73) Titulaire: IDEMIA France, 92700 Colombes (FR)
(72) Inventeur: Meslin, Jean-Marc, 95170, DEUIL LA BARRE (FR)
(74) Mandataire: Cabinet Beau de Loménie

(56) Documents cités:
- EP-A- 1 104 973
- US-A1- 2005 109 841
- US-A1- 2008 017 704
- US-A1- 2008 200 160
- MANFRED AIGNER ET AL: "A System of Secure Virtual Coupons Using NFC Technology" 2007 IEEE INTERNATIONAL CONFERENCE ON PERVASIVE COMPUTING AND COMMUNICATIONS WORKSHOPS, IEEE, LOS ALAMITOS, CA, USA, 1 mars 2007 (2007-03-01), pages 362-366, XP031070481 ISBN: 978-0-7695-2788-8
- DOMINIKUS S ET AL: "mCoupons: An Application for Near Field Communication (NFC)" ADVANCED INFORMATION NETWORKING AND APPLICATIONS WORKSHOPS, 2007, AINAW '07. 21ST INTERNATIONAL CONFERENCE ON, IEEE, PISCATAWAY, NJ, USA, 21 mai 2007 (2007-05-21), pages 421-428, XP031334719 ISBN: 978-0-7695-2847-2
- RUIZ-MARTÃNEZ A ET AL: "Smartcard-Based e-Coin for Electronic Payments on the (Mobile) Internet" SIGNAL-IMAGE TECHNOLOGIES AND INTERNET-BASED SYSTEM, 2007 THIRD INTERNATIONAL IEEE CONFERENCE ON, IEEE, PISCATAWAY, NJ, USA, 16 décembre 2007 (2007-12-16), pages 361-368, XP031316574 ISBN: 978-0-7695-3122-9
- MAGNUS EGEBERG: "The mobile phone as a contactless ticket" MASTER OF SCIENCE IN COMMUNICATION TECHNOLOGY, [Online] juin 2006 (2006-06), XP002531528 Norwegian University of Science and Technology, Department of Telematics Extrait de l'Internet: URL:http://daim.idi.ntnu.no/masteroppgaver /IME/ITEM/2006/1268/masteroppgave.pdf> [extrait le 2009-06-09]

## Description

### Arrière-plan de l'invention

L'invention se situe dans le domaine des télécommunications et concerne plus particulièrement un système et un procédé pour délivrer un bien ou un service à un utilisateur.

D'une façon générale, lorsqu'un utilisateur souhaite accéder à un bien ou à un service auprès d'un serveur, il doit établir une communication avec ce serveur et, lorsque ce bien ou service est réservé à un public restreint, s'authentifier auprès de ce serveur pour l'obtenir.

Il est donc nécessaire que cet utilisateur connaisse l'adresse de ce serveur ou qu'il mette en œuvre des moyens pour obtenir cette adresse, par exemple en utilisant un moteur de recherche.

### Objet et résumé de l'invention

L'invention vise un système pour délivrer un bien ou un service à un utilisateur qui ne présente pas une telle contrainte.

Plus précisément, ce système comporte :
- une borne comportant des moyens de communication sans fil courte portée aptes à émettre un signal comprenant un jeton numérique ;
- un dispositif portable comportant des moyens de communication sans fil courte portée aptes à recevoir ce signal, des moyens pour extraire le jeton de ce signal, et des moyens de mémorisation du jeton ;
- un terminal comportant des moyens de communication aptes à envoyer le jeton à un serveur ; et
- le serveur, celui-ci comportant des moyens pour délivrer le bien ou le service sur réception du jeton.

Ainsi, l'invention permet avantageusement à l'utilisateur d'accéder à un bien ou à un service disponible auprès d'un serveur sans avoir à saisir ou à rechercher l'adresse de ce serveur.

Dans un scénario d'utilisation, l'utilisateur obtient en effet un jeton dès qu'il approche son dispositif portable de la borne, ce jeton pouvant ensuite être envoyé par un terminal au serveur, le serveur délivrant le bien ou le service à l'utilisateur sur réception du jeton, ce scenario ne nécessitant aucune saisie ni recherche de l'adresse du serveur par l'utilisateur.

On notera que le jeton peut être utilisé un nombre déterminé de fois, ou d'utilisation illimité.

Dans un mode particulier de réalisation de l'invention, le bien délivré par le serveur est un objet numérique.

Dans ce mode particulier de réalisation, le serveur comporte des moyens d'envoi de l'objet numérique au terminal, celui-ci comportant des moyens pour le recevoir.

D'une façon générale, l'expression "objet numérique" vise tout type de données numériques, et notamment des données directement exploitables par l'utilisateur (par exemple des documents multimédia) ou des clés ou codes d'accès à de telles données.

Dans un mode de réalisation de l'invention, le jeton comporte l'adresse du serveur.

Dans un mode particulier de réalisation de l'invention, cette adresse est constituée par une URL (Uniform Resource Locator).

En variante, cette adresse peut être obtenue par le dispositif portable ou par le terminal à partir du jeton.

Dans un mode particulier de réalisation, les moyens de communication sans fil courte portée de la borne et du dispositif portable sont du type NFC, en anglais "Near Field Communication", défini par le NFC Forum.

La borne peut par exemple être :
- une borne d'accès à un bâtiment public ;
- un dispositif de contrôle d'accès à un moyen de transport (métro, gare,...) ;
- un distributeur automatique de billets de banque ou de biens de consommation ; ou
- un support (panneau publicitaire, affiche murale,...).

Le dispositif portable peut notamment être constitué par un téléphone mobile ou par une clé USB.

Dans un mode de réalisation de l'invention, la borne émet le signal comprenant le jeton numérique à destination d'un dispositif portable, sans faire aucun contrôle sur ce dispositif.

Mais, en variante, la borne authentifie le dispositif portable et autorise ou interdit l'émission du signal en fonction du résultat de cette authentification.

Par exemple, lorsque la borne est constituée par un dispositif d'accès à une gare, elle peut choisir de n'émettre le signal qu'aux usagers ayant un abonnement prédéterminé.

De la même façon, lorsque la borne est constituée par un distributeur automatique de billets de banque, elle peut choisir de n'émettre le signal qu'à destination des clients d'une banque particulière ou qu'à une clientèle particulière, par exemple aux titulaires d'un compte réservé aux jeunes.

L'authentification peut avoir lieu au cours d'une transaction entre la borne et le dispositif portable (retrait de billets, accès au métro,...).

Dans un mode particulier de réalisation de l'invention, le terminal apte à communiquer avec le serveur est un ordinateur personnel comportant des moyens de connexion avec la clé USB.

Dans un mode de réalisation, le dispositif portable est une clé USB comportant des moyens pour mémoriser un programme d'ordinateur comportant des instructions pour envoyer le jeton au serveur. Le programme d'ordinateur peut aussi comporter des instructions pour recevoir l'objet numérique en réponse à cet envoi.

Dans ce mode de réalisation, l'ordinateur personnel comporte des moyens pour détecter la clé USB et pour exécuter le programme consécutivement à cette détection.

Dans un mode particulier de réalisation, la clef USB comporte des moyens de mémorisation de l'objet numérique. Un programme d'ordinateur mémorisé dans une clé USB et apte à être exécuté automatiquement par l'ordinateur personnel lorsque la clé USB y est insérée, est connu de l'homme du métier sous le nom de programme "Autorun".

Dans un mode de réalisation, ce programme d'ordinateur comporte des instructions pour présenter l'adresse du serveur extraite du jeton dans une fenêtre d'un navigateur Internet du terminal.

Dans un mode particulier de réalisation, le terminal comporte des moyens pour obtenir une autorisation explicite d'un utilisateur pour mettre en œuvre ledit programme d'ordinateur. En pratique, ces moyens peuvent être constitués par un menu de l'interface homme-machine de l'ordinateur personnel, éventuellement avec saisie de mot de passe.

Le système de l'invention permet d'offrir de nouveaux services à l'utilisateur.

En effet, en reprenant l'exemple précédent, le détenteur d'une clé USB qui utilise cette clé USB pour accéder à son moyen de transport, peut recevoir dans sa clé USB, sans s'en rendre compte, un jeton, ce jeton étant automatiquement envoyé à un serveur pour obtenir un objet numérique lorsque l'utilisateur connecte sa clé USB à son ordinateur personnel.

L'objet numérique peut par exemple être constitué par un fichier pdf offrant une place gratuite au cinéma.

Dans un mode de réalisation de l'invention, le serveur envoie l'objet numérique à l'émetteur du jeton, sans contrôle particulier.

Dans un mode particulier de réalisation de l'invention, le jeton comporte une donnée d'authentification et le serveur vérifie cette donnée avant de délivrer le bien ou le service à à l'émetteur de ce jeton.

Dans un mode particulier de réalisation, la donnée d'authentification est une donnée cryptographique. Par exemple, la donnée d'authentification peut être un certificat ou plus généralement une donnée signée par une clé privée de la borne, la clé publique associée étant connue du serveur.

Vue sous cet aspect, l'invention permet d'offrir des droits à l'utilisateur, ces droits étant temporaires ou permanents, selon la durée de vie du jeton (droit d'accès à un bâtiment, droit à une offre promotionnelle, ...).

Corrélativement, l'invention vise un procédé pour délivrer un bien ou un service, ce procédé comportant :
- une étape de réception d'un signal courte portée comprenant un jeton numérique ;
- une étape d'envoi de ce jeton par un terminal à un serveur ; et
- une étape de délivrance du bien ou du service par le serveur, sur réception de ce jeton.

Les avantages et caractéristiques particuliers du procédé selon l'invention sont identiques à ceux du système mentionnés précédemment.

En particulier, dans un mode de réalisation de l'invention, le procédé selon l'invention comporte une étape d'authentification d'un dispositif portable et une étape de contrôle apte à autoriser ou empêcher l'émission du jeton numérique en fonction du résultat de cette étape d'authentification.

Dans un mode particulier de réalisation de l'invention, lorsque le jeton comporte une donnée d'authentification, le procédé selon l'invention comporte une étape de vérification de cette donnée et une étape de contrôle apte à autoriser ou empêcher la délivrance du bien ou service le serveur en fonction du résultat de cette vérification.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un système pour délivrer un bien ou un service conforme à l'invention, dans un mode particulier de réalisation ;
- la figure 2 représente une clé USB pouvant être utilisée dans le système de la figure 1 ; et
- la figure 3 représente, sous forme d'organigramme, les principales étapes d'un procédé pour délivrer un bien ou un service conforme à l'invention, dans un mode particulier de réalisation.

### Description détaillée d'un mode de réalisation

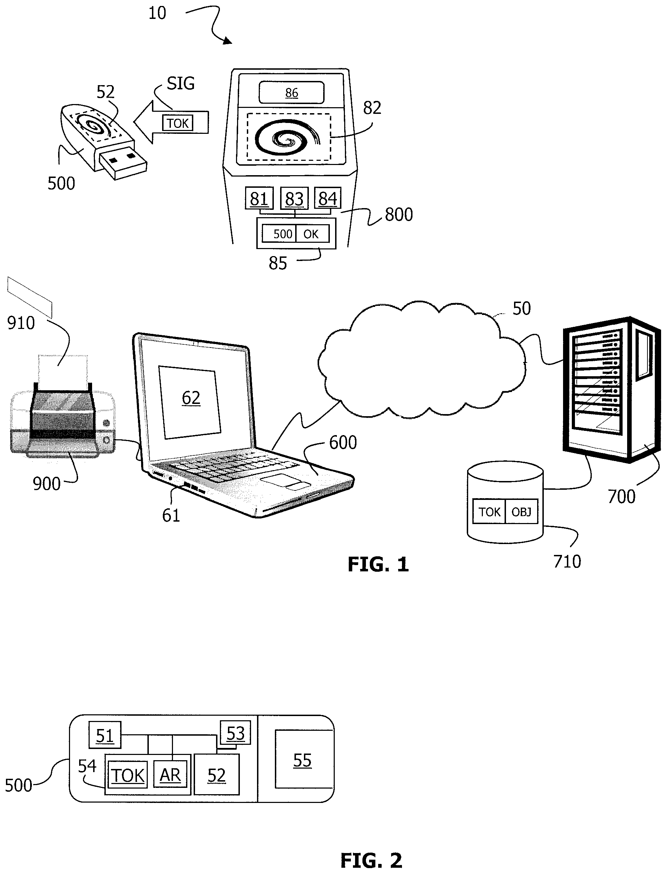

La **figure 1** représente un système 10 pour délivrer un bien ou un service conforme à l'invention dans un mode particulier de réalisation.

Ce système se compose principalement d'une borne 800, d'un dispositif portable 500 constitué par une clé USB, d'un terminal 600 constitué par un ordinateur personnel et d'un serveur 700, le terminal 600 et le serveur 700 étant interconnectés par le réseau Internet référencé 50.

On suppose ici que la borne 800 est un dispositif d'accès au métro, celui-ci pouvant être commandé par la clé USB 500 si elle contient des données représentatives d'un abonnement valable de l'utilisateur pour accéder au métro.

Dans le mode de réalisation décrit ici, la borne 800 comporte un processeur 81, des moyens de communication sans fil courte portée NFC 82, une mémoire morte 83, une mémoire vive 84 et une mémoire non volatile réinscriptible 85.

La mémoire morte 83 mémorise un programme d'ordinateur permettant de faire fonctionner la borne 800, les variables nécessaires à l'exécution de ce programme étant temporairement chargées dans la mémoire vive 84.

Nous supposerons dans cet exemple que le processeur 81 de la borne 800, en coopération avec le programme d'ordinateur mémorisé dans la mémoire morte 83, est apte à authentifier tout dispositif portable effectuant une transaction avec cette borne.

Dans l'exemple de réalisation décrit ici, lorsque l'utilisateur utilise sa clé USB 500 pour accéder au métro, la borne 800 récupère l'identifiant ou une donnée d'authentification 500 de cette clé USB et vérifie, dans une table mémorisée dans la mémoire non volatile réinscriptible 85 si cette borne est autorisée à émettre, en utilisant ses moyens de communication sans fil courte portée 82, un signal SIG comportant un jeton numérique TOK à destination de cette clé.

Si tel est le cas, ce signal SIG est reçu par la clé USB 500 dont un exemple de réalisation va maintenant être décrit en référence à la **figure 2****.**

Dans cet exemple, la clé USB 500 comporte un processeur 51, des moyens de communication sans fil courte portée NFC 52, une mémoire non volatile réinscriptible 54 et un connecteur 55.

Dans le mode de réalisation décrit ici, la mémoire non volatile 54 comporte un programme d'ordinateur pour recevoir le signal SIG, en extraire le jeton TOK et le mémoriser dans la mémoire 54. Elle comporte aussi un programme d'ordinateur AR pouvant être exécuté automatiquement lorsque l'utilisateur insère le connecteur 55 de la clé USB 500 dans un port USB de son ordinateur personnel.

Les variables nécessaires à l'exécution des programmes d'ordinateur exécutés par le processeur 51 sont temporairement chargées dans une mémoire vive 53 de type RAM.

Lorsque la clé USB 500 reçoit le signal SIG émis par la borne 800, son processeur 51 est apte à extraire le jeton TOK de ce signal et à le mémoriser dans la mémoire non volatile réinscriptible 54.

On notera que ceci peut se faire de façon complètement transparente pour l'utilisateur.

En variante, un message peut être affiché sur un écran 86 de la borne 800.

Dans le mode de réalisation décrit ici, le jeton TOK est composé d'un champ comportant l'adresse du serveur 700 et d'un champ signé avec une clé privée de la borne 800.

On supposera que le détenteur de la clé USB 500 rentre chez lui, la clé USB comportant toujours, dans sa mémoire non volatile réinscriptible 54, le jeton TOK émis par la borne 800.

Lorsque l'utilisateur insère le connecteur 55 de sa clé USB dans son ordinateur personnel 600, celui-ci exécute automatiquement, après autorisation explicite de l'utilisateur au moyen de l'interface homme-machine de l'ordinateur 600, le programme d'ordinateur AR mémorisé dans la mémoire non volatile réinscriptible 54.

Conformément au mode de réalisation décrit ici, ce programme Autorun AR comporte des moyens pour envoyer le jeton au serveur 700, via le réseau Internet 50.

Lorsque le serveur 700 reçoit le jeton TOK, il vérifie la validité de la signature en utilisant une clé publique associée à la clé privée, et si la signature est vérifiée, il renvoie l'objet numérique OBJ associé au jeton TOK dans une base de données 710.

L'objet numérique OBJ est reçu par le terminal 600 et présenté, par exemple, dans la fenêtre d'un navigateur Internet 62. Dans l'exemple décrit ici, il est aussi mémorisé dans la mémoire 53 de la clef USB 500.

Nous supposerons dans cet exemple que l'objet numérique OBJ est un fichier pdf, celui-ci pouvant être imprimé sur une imprimante 900 connectée à l'ordinateur personnel 600.

Le document 910 imprimé est, dans cet exemple, une entrée gratuite au cinéma.

Dans un autre mode de réalisation, le programme Autorun AR présente l'adresse du serveur 700 dans la fenêtre 62 du navigateur Internet 62 afin de permettre à l'utilisateur d'interagir avec le serveur 700, via ce navigateur, pour obtenir le bien ou le service désiré. Par exemple, si le bien concerné est une place de cinéma, le choix de cette place de cinéma peut être effectuée par l'utilisateur en utilisant son navigateur 62.

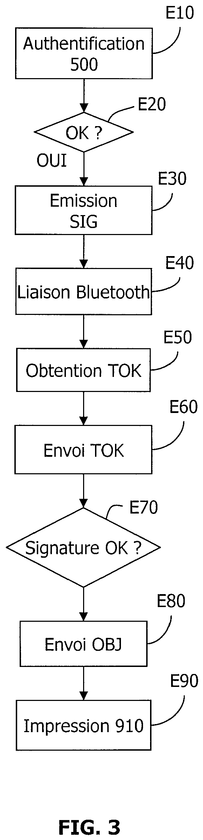

En référence à la **figure 3****,** nous allons maintenant décrire les principales E10 à E90 d'un procédé pour délivrer un bien ou un service conforme à l'invention dans un mode particulier de réalisation.

Au cours d'une étape E10, une affiche 800 authentifie un dispositif portable 500 constitué ici par un téléphone mobile équipé de moyens de communication sans fil NFC.

Dans un mode particulier de réalisation de l'invention, cette authentification a lieu dès que l'utilisateur approche son téléphone 500 de l'affiche 800.

Au cours d'un test E20, la fiche 800 vérifie si le téléphone 500 est dûment authentifié.

Si tel est le cas, l'affiche 800 émet, au cours d'une étape E30, via ses moyens de communication sans fil NFC, un signal SIG comportant un jeton TOK.

Dans l'exemple de réalisation décrit ici, le jeton TOK comporte l'adresse du serveur 700. Dans l'exemple de réalisation décrit ici, cette adresse est constituée par une URL (Uniform Resource Locator).

Ce signal est reçu, au cours de la même étape E30, par le téléphone portable 500.

Le téléphone 500 extrait alors le jeton TOK du signal SIG et le mémorise dans la mémoire non volatile réinscriptible.

Nous considérerons maintenant que l'utilisateur du téléphone 500 établit une liaison Bluetooth entre son téléphone 500 et son ordinateur portable 600.

Dans l'exemple décrit ici, l'ordinateur portable 600 comporte un programme d'ordinateur comportant des instructions pour obtenir de jeton TOK par la liaison Bluetooth (étape E50) et des instructions pour envoyer le jeton TOK au serveur 700 via le réseau Internet 50 (étape E60).

En variante de la liaison Bluetooth, on peut notamment utiliser une liaison USB ou une communication en champ proche (NFC).

Dans le mode de réalisation décrit ici, le jeton TOK est composé d'un champ comportant l'adresse du serveur 700 sur le réseau Internet et d'un champ signé avec une clé privée de la borne 800.

Lorsque le serveur 700 reçoit le jeton TOK, il vérifie, au cours d'une étape E70, si la signature du jeton TOK est valide, en utilisant une clé publique qui lui a préalablement été communiquée par un administrateur de la borne 800.

Si la signature est valide, le serveur 700 envoie l'objet numérique OBJ associé dans sa base de données 710 avec le jeton TOK à l'ordinateur portable 600. Celui-ci reçoit cet objet numérique en mettant en œuvre des instructions du programme d'ordinateur précité.

Dans l'exemple décrit ici, l'objet numérique OBJ est un document pdf.

Au cours d'une étape E90, l'utilisateur de l'ordinateur portable 600 imprime ce document pdf sur une imprimante 900 et obtient un document papier 910 constitué en l'espèce par une entrée gratuite au cinéma.

## Revendications

1. Système pour délivrer un bien ou un service (OBJ) comportant :
- une borne (800) comportant des moyens (82) de communication sans fil courte portée aptes à émettre un signal (SIG) comprenant un jeton numérique (TOK) ledit jeton (TOK) comportant l'adresse d'un serveur (700) ;
- un dispositif portable (500) comportant des moyens (52) de communication sans fil courte portée aptes à recevoir ledit signal (SIG), des moyens (51) pour extraire ledit jeton (TOK) dudit signal, et des moyens (54) de mémorisation dudit jeton (TOK) ;
- un terminal (600) personnel d'un utilisateur interconnecté via un réseau Internet (50) audit serveur (700) comportant des moyens (61) de connexion au ledit dispositif portable (500) et comportant des moyens de communication aptes à envoyer ledit jeton (TOK) audit serveur (700) via ledit réseau (50) ; et
- ledit serveur (700), celui-ci comportant des moyens pour délivrer ledit bien ou service (OBJ) audit terminal sur réception dudit jeton (TOK).

2. Système selon la revendication 1 dans lequel ledit bien est un objet numérique (OBJ), **caractérisé en ce que** :
- ledit serveur (700) comporte des moyens d'envoi dudit objet numérique (OBJ) audit terminal (600) ; et **en ce que** :
- ledit terminal (600) comporte des moyens de réception dudit objet numérique.

3. Système selon l'une quelconque des revendications 1 à 2, **caractérisé en ce que** ladite borne (800) comporte :
- des moyens (81, 83) pour authentifier ledit terminal utilisateur (500) ; et
- des moyens (81) de contrôle aptes à autoriser ou empêcher l'émission dudit signal (SIG) en fonction du résultat de ladite authentification.

4. Système selon l'une quelconque des revendications 1 à 3, dans lequel ledit dispositif portable (500) est une clef USB et ledit terminal (600) un ordinateur personnel (600) comportant des moyens (61) de connexion de ladite clef USB (500).

5. Système selon la revendication 4, **caractérisé en ce que** ladite clef USB (500) comporte des moyens (54) de mémorisation d'un programme d'ordinateur (AR) et **en ce que** ledit ordinateur personnel (600) comporte des moyens de détection de ladite clef USB (500) et des moyens pour exécuter ledit programme d'ordinateur (AR) consécutivement à ladite détection, ledit programme (AR) comportant des instructions pour envoyer ledit jeton (TOK) audit serveur (700).

6. Système selon la revendication 2 et 5, **caractérisé en ce que** ledit programme d'ordinateur (AR) comporte des instructions pour présenter ladite adresse dudit serveur (700) dans une fenêtre d'un navigateur Internet (62) dudit terminal (600).

7. Système selon l'une quelconque des revendications 4 à 6, **caractérisé en ce que** ledit terminal (600) comporte des moyens pour obtenir une autorisation explicite d'un utilisateur pour mettre en œuvre ledit programme d'ordinateur (600).

8. Système selon l'une quelconque des revendications 4 à 7 lorsqu'elles dépendent de la revendication 2, **caractérisé en ce que** ladite clef USB (500) comporte des moyens (53) de mémorisation dudit objet numérique (OBJ).

9. Système selon l'une quelconque des revendications 1 à 8, **caractérisé en ce que**, ledit jeton (TOK) comportant une donnée d'authentification, ledit serveur (700) comporte des moyens de vérification de cette donnée, et des moyens de contrôle aptes à autoriser ou empêcher la délivrance dudit bien ou service (OBJ) en fonction du résultat de ladite vérification.

10. Système selon la revendication 9, **caractérisé en ce que** ladite donnée d'authentification est une donnée cryptographique.

11. Procédé pour délivrer un bien ou un service (OBJ) comportant :
- émettre, par une borne (800) comportant des moyens (82) de communication sans fil courte portée, un signal (SIG) comprenant un jeton numérique (TOK) ledit jeton (TOK) comportant l'adresse d'un serveur (700) ;
- recevoir par un dispositif portable (500) comportant des moyens (52) de communication sans fil courte portée ledit signal (SIG), extraire ledit jeton (TOK) dudit signal, et mémoriser ledit jeton (TOK) ;
- connecter ledit dispositif portable (500) à un terminal (600) personnel d'un utilisateur et envoyer par ledit terminal (600) interconnecté via un réseau Internet (50) ledit jeton (TOK) audit serveur (700) via ledit réseau (50); et
- délivrer par ledit serveur (700) ledit bien ou service (OBJ) audit terminal sur réception dudit jeton (TOK).

12. Procédé selon la revendication 11, **caractérisé en ce qu'**il comporte une étape (E10) d'authentification d'un dispositif portable (500) et une étape (E20) de contrôle apte à autoriser ou empêcher l'émission (E30) dudit jeton numérique (TOK) en fonction du résultat de ladite étape (E10) d'authentification.

13. Procédé selon l'une quelconque des revendications 11 à 12, **caractérisé en ce que**, ledit jeton (TOK) comportant une donnée d'authentification, il comporte une étape (E70) de vérification de ladite donnée et une étape (E70) de contrôle apte à autoriser ou empêcher la délivrance dudit bien ou service (OBJ) par ledit serveur (700) en fonction du résultat de ladite vérification (E70).

## Patentansprüche

1. System zur Lieferung eines Guts oder eines Dienstes (OBJ), umfassend:
- einen Anschlusspunkt (800), der Mittel (82) zur drahtlosen Kommunikation mit kurzer Reichweite beinhaltet, die dazu geeignet sind, ein Signal (SIG), das einen numerischen Token (TOK) umfasst, zu senden, wobei der Token (TOK) die Adresse eines Servers (700) beinhaltet,
- eine tragbare Vorrichtung (500), die Mittel (52) zur drahtlosen Kommunikation mit kurzer Reichweite, die dazu geeignet sind, das Signal (SIG) zu empfangen, Mittel (51) zum Extrahieren des Tokens (TOK) aus dem Signal und Mittel (54) zum Speichern des Tokens (TOK) umfasst,
- ein persönliches Endgerät (600) eines Benutzers, das über ein Internet-Netzwerk (50) mit dem Server (700) verbunden ist und Mittel (61) zur Verbindung mit der tragbaren Vorrichtung (500) und Mittel zur Kommunikation umfasst, die dazu geeignet sind, den Token (TOK) über das Netzwerk (50) an den Server (700) zu senden, und
- den Server (700), der Mittel zum Liefern des Guts oder des Dienstes (OBJ) an das Endgerät nach Empfang des Tokens (TOK) umfasst.

2. System nach Anspruch 1, wobei das Gut ein numerischer Gegenstand (OBJ) ist, **dadurch gekennzeichnet, dass**:
- der Server (700) Mittel zum Senden des numerischen Gegenstands (OBJ) an das Endgerät (600) umfasst, und dadurch, dass:
- das Endgerät (600) Mittel zum Empfangen des numerischen Gegenstands umfasst.

3. System nach einem der Ansprüche 1 bis 2, **dadurch gekennzeichnet, dass** der Anschlusspunkt (800) umfasst:
- Mittel (81, 83) zur Authentifizierung des Benutzerendgeräts (500) und
- Mittel (81) zur Steuerung, die dazu geeignet sind, das Senden des Signals (SIG) in Abhängigkeit von dem Ergebnis der Authentifizierung zu autorisieren oder zu verhindern.

4. System nach einem der Ansprüche 1 bis 3, wobei die tragbare Vorrichtung (500) ein USB-Stick ist und das Endgerät (600) ein Personalcomputer (600) ist, der Mittel (61) für den Anschluss des USB-Sticks (500) umfasst.

5. System nach Anspruch 4, **dadurch gekennzeichnet, dass** der USB-Stick (500) Mittel (54) zur Speicherung eines Computerprogramms (AR) umfasst, und dadurch, dass der Personalcomputer (600) Mittel zur Erfassung des USB-Sticks (500) und Mittel zum Ausführen des Computerprogramms (AR) auf die Erfassung folgend beinhaltet, wobei das Programm (AR) Anweisungen zum Senden des Tokens (TOK) an den Server (700) beinhaltet.

6. System nach Anspruch 2 und 5, **dadurch gekennzeichnet, dass** das Computerprogramm (AR) Anweisungen zum Darstellen der Adresse des Servers (700) in einem Fenster eines Internet-Browsers (62) des Endgeräts (600) beinhaltet.

7. System nach einem der Ansprüche 4 bis 6, **dadurch gekennzeichnet, dass** das Endgerät (600) Mittel zum Erhalten einer ausdrücklichen Autorisierung eines Benutzers beinhaltet, um das Computerprogramm (600) auszuführen.

8. System nach einem der Ansprüche 4 bis 7, sofern abhängig von Anspruch 2, **dadurch gekennzeichnet, dass** der USB-Stick (500) Mittel (53) zur Speicherung des numerischen Gegenstands (OBJ) beinhaltet.

9. System nach einem der Ansprüche 1 bis 8, **dadurch gekennzeichnet, dass** der Token (TOK) einen Authentifizierungsdatensatz beinhaltet und der Server (700) Mittel zur Verifizierung dieses Datensatzes und Mittel zum Steuern umfasst, die dazu geeignet sind, die Lieferung des Guts oder des Dienstes (OBJ) in Abhängigkeit von dem Ergebnis der Verifizierung zu autorisieren oder zu verhindern.

10. System nach Anspruch 9, **dadurch gekennzeichnet, dass** der Authentifizierungsdatensatz ein kryptographischer Datensatz ist.

11. Verfahren zur Lieferung eines Guts oder eines Dienstes (OBJ), umfassend:
- Senden eines Signals (SIG), der einen numerischen Token (TOK) umfasst, wobei der Token (TOK) die Adresse eines Servers (700) beinhaltet, durch einen Anschlusspunkt (800), der Mittel (82) zur drahtlosen Kommunikation mit kurzer Reichweite beinhaltet,
- Empfangen des Signals (SIG) durch eine tragbare Vorrichtung (500), die Mittel (52) zur drahtlosen Kommunikation mit kurzer Reichweite umfasst, Extrahieren des Tokens (TOK) aus dem Signal und Speichern des Tokens (TOK),
- Verbinden der tragbaren Vorrichtung (500) mit einem persönlichen Endgerät (600) eines Benutzers und Senden durch das Endgerät (600), das über ein Internet-Netzwerk (50) verbunden ist, des Tokens (TOK) an den Server (700) über das Netzwerk (50), und
- Liefern durch den Server (700) des Guts oder des Dienstes (OBJ) an das Endgerät nach Empfang des Tokens (TOK).

12. Verfahren nach Anspruch 11, **dadurch gekennzeichnet, dass** es einen Schritt (E10) zur Authentifizierung einer tragbaren Vorrichtung (500) und einen Schritt (E20) zum Steuern beinhaltet, der dazu geeignet ist, das Senden (E30) des numerischen Tokens (TOK) in Abhängigkeit von dem Ergebnis des Schritts (E10) zur Authentifizierung zu autorisieren oder zu verhindern.

13. Verfahren nach einem der Ansprüche 11 bis 12, **dadurch gekennzeichnet, dass** der Token (TOK) einen Authentifizierungsdatensatz beinhaltet, und das Verfahren einen Schritt (E70) zur Verifizierung des Datensatzes und einen Schritt (E70) zum Steuern umfasst, der dazu geeignet ist, die Lieferung des Guts oder des Dienstes (OBJ) durch den Server (700) in Abhängigkeit von dem Ergebnis der Verifizierung (E70) zu autorisieren oder zu verhindern.

## Claims

1. A system for delivering a good or a service (OBJ) including:
- a terminal (800) including short-range wireless communication means (82) suitable for emitting a signal (SIG) comprising a digital token (TOK), said token (TOK) including the address of a server (700);
- a portable device (500) including means (52) for short-range wireless communication able to receive said signal (SIG), means (51) for extracting said token (TOK) from said signal, and means (54) for storing said token (TOK);
- a personal terminal (600) of a user interconnected via an Internet network (50) to said server (700) including means (61) for connecting to said portable device (500) and including communication means able to send said token (TOK) to said server (700) via said network (50); and
- said server (700), the latter including means for delivering said good or service (OBJ) to said terminal upon receiving said token (TOK).

2. The system according to claim 1, wherein said good is a digital object (OBJ), **characterized in that**:
- said server (700) includes means for sending said digital object (OBJ) to said terminal (600); and **in that**:
- said terminal (600) includes means for receiving said digital object.

3. The system according to any one of claims 1 to 2, **characterized in that** said terminal (800) includes:
- means (81, 83) for authenticating said user terminal (500); and
- checking means (81) able to authorize or prevent the sending of said signal (SIG) as a function of the result of said authentication.

4. The system according to any one of claims 1 to 3, wherein said portable device (500) is a USB key and said terminal (600) is a personal computer (600) including means (61) for connecting said USB key (500).

5. The system according to claim 4, **characterized in that** said USB key (500) includes means (54) for storing a computer program (AR) and **in that** said personal computer (600) includes means for detecting said USB key (500) and means for executing said computer program (AR) following said detection, said program (AR) including instructions for sending said token (TOK) to said server (700).

6. The system according to claims 2 and 5, **characterized in that** said computer program (AR) includes instructions for presenting said address of said server (700) in a window of an Internet browser (62) of said terminal (600).

7. The system according to any one of claims 4 to 6, **characterized in that** said terminal (600) includes means for obtaining an explicit authorization from a user to implement said computer program (600).

8. The system according to any one of claims 4 to 7 when they depend on claim 2, **characterized in that** said USB key (500) includes means (53) for storing said digital object (OBJ).

9. The system according to any one of claims 1 to 8, **characterized in that**, said token (TOK) including an authentication datum, said server (700) includes verification means of said datum, and checking means able to authorize or prevent the delivery of said good or service (OBJ) as a function of the result of said verification.

10. The system according to claim 9, **characterized in that** said authentication datum is a cryptographical datum.

11. A method for delivering a good or service (OBJ) including:
- issuing, via a terminal (800) including short-range wireless communication means (82), a signal (SIG) comprising a digital token (TOK), said token (TOK) including the address of a server (700);
- receiving, via a portable device (500) including short-range wireless communication means (52), said signal (SIG), extracting said token (TOK) from said signal, and storing said token (TOK);
- connecting said portable device (500) to a personal terminal (600) of a user and sending, via said terminal (600) interconnected via an Internet network (50), said token (TOK) to said server (700) via said network (50); and
- delivering, by said server (700), said good or service (OBJ) to said terminal upon receiving said token (TOK).

12. The method according to claim 11, **characterized in that** it includes a step (E10) for authentication of a portable device (500) and a checking step (E20) able to authorize or prevent the sending (E30) of said digital token (TOK) as a function of the result of said authentication step (E10).

13. The method according to any one of claims 11 to 12, **characterized in that**, said token (TOK) including an authentication datum, it includes a step (E70) for verification of said datum and a checking step (E70) able to authorize or prevent the delivery of said good or service (OBJ) by said server (700) as a function of the result of said verification (E70).
